# EUROPÄISCHE PATENTSCHRIFT

(11) **EP 0 459 117 B1**
(45) Veröffentlichungstag und Bekanntmachung des Hinweises auf die Patenterteilung: **14.07.1993**
(21) Anmeldenummer: 91105856.8
(22) Anmeldetag: 12.04.1991
(51) Int. Cl.: B60T 8/26, B60T 8/48, B60T 8/42, B60T 8/40

(54) **Hydraulische Zweikreisbremsanlage**
Dual circuit hydraulic brake system
Système de freinage hydraulique à double circuit

(30) Priorität: 21.05.1990 DE 4016308
(43) Veröffentlichungstag der Anmeldung: 04.12.1991
(73) Patentinhaber: ROBERT BOSCH GMBH, 70442 Stuttgart (DE)
(72) Erfinder: Willmann, Karl-Heinz, Dipl.-Ing., W-7149 Freiberg/N (DE)

(56) Entgegenhaltungen:
- EP-A- 0 062 246
- EP-A- 0 265 623
- DE-A- 3 722 010
- DE-A- 3 800 854
- GB-A- 2 137 709
- GB-A- 2 141 499

## Beschreibung

Die Erfindung geht aus von einer hydraulischen Zweikreisbremsanlage mit Blockierschutzsystem (ABS) und Antriebsschlupfregelung (ASR) für Kraftfahrzeuge der im Oberbegriff des Anspruchs 1 definierten Gattung.

Eine solche Bremsanlage ist aus der DE 38 00 854 Al bekannt. Hier wird die Pumpenspeisevorrichtung für den ASR-Betrieb von einer Vakuumdose und einem Schaltventil gebildt, das die Druckkammer der Vakuumdose im ASR-Betrieb an dem Eingang des dem Bremskreis der Antriebsräder der Hinterachse zugeordneten Pumpenelement der Rückförderpumpe anschließt. Durch den von der Vakuumdose in der mit Bremsflüssigkeit gefüllten Druckkammer erzeugten Ladedrucks wird Bremsflüssigkeit in das Pumpenelement eingespeist, das seinerseits einen in etwa konstanten Bremsversorgungsdruck an die den Antriebsrädern zugeordneten Steuerventile legt.

Der zum Abbremsen eines schlüpfenden Antriebsrads in dessen Radbremszylinder erforderlichen Bremsdruck wird durch Schalten des zugeordneten Steuerventils eingestellt.

Aus der EP 0 062 246 Bl ist eine Zweikreisbremsanlage mit Vorderachs/Hinterachs-Bremskreisaufteilung bekannt, die eine Anpassungsvorrichtung aufweist, um die vom Hauptbremszylinder eingesteuerte Bremskraft auf die Räder der Vorder- und Hinterachse zu verteilen. Die Anpassungsvorrichtung weist ein hydraulisches Betätigungsorgan auf, das von einem Mikroprozessor derart gesteuert wird, daß beim Bremsen der Bremsdruck im Bremskreis der Hinterachse als eine Funktion des Bremsdrucks im Bremskreis der Vorderachse so eingestellt wird, daß der Bremsdruck im Bremskreis der Hinterachse stets etwas niedriger ist als ein Wert, der sich aus einem im Mikroprozessor gespeicherten mathematischen Ausdruck ergibt. Durch diese Anpassungsvorrichtung kann die Hinterachs-Abbremsung frei gewählt werden, und zwar entsprechend einer Idealverteilung zwischen Vorderachs- und Hinterachsbremsdruck, so daß in jeder Phase des Fahrzeugbetriebs jedwede instabilen Fahrzustände, z.B. durch Überbremsung der Hinterachse, vermieden werden.

### Vorteile der Erfindung

Die erfindungsgemäße Zweikreisbremsanlage mit den kennzeichnenden Merkmalen des Anspruchs 1 hat den Vorteil, daß die für die Antriebsschlupfregelung erforderliche Einrichtung zugleich für die Bremskraftverteilung im Vorderachs- und Hinterachsbremskreis beim normalen Bremsen verwendet wird. Dadurch können im erheblichen Umfang Bauelemente eingespart werden. Das bei der bekannten Zweikreisbremsanlage erforderliche hydraulische Betätigungsorgan zur hydraulischen Bremskraftverteilung, das relativ hohe Herstellungskosten verursacht, wird entbehrlich. Der neben der Einrichtung zur Antriebsschlupfregelung erforderliche Zusatzaufwand besteht in zwei Drucksensoren und einer elektronischen Steuervorrichtung, deren Funktion in die Steuereinheit für Antiblockierschutz und Antriebsschlupfregelung mit integriert werden kann.

Durch die in den weiteren Ansprüchen aufgeführten Maßnahmen sind vorteilhafte Weiterbildungen und Verbesserungen der im Anspruch 1 angegebenen Zweikreisbremsanlage möglich.

Gemäß einer bevorzugten Ausführungsform der Erfindung weist die Pumpenspeisevorrichtung einen aktiven Speicher mit steuerbarem Speicherdruck auf, der an dem Eingang des dem Bremskreis der Hinterachse zugeordneten Pumpenelements angeschlossen ist und dessen Speicherdruck den von dem Pumpenelement über die geöffneten Steuerventile in den Radbremszylindern der Hinterräder eingestellten Bremsdruck vorgibt. Durch diese Ausbildung der Pumpenspeisevorrichtung als aktiver Speicher braucht zur Bremsdruckeinstellung in den Radbremszylindern der Hinterräder keine Bremsdruckmodulation durch Taktung der Steuerventile durchgeführt zu werden. Der erforderliche Bremsdruck wird aufgrund des vom Speicher vorgegebenen Ladedrucks von der Rückförderpumpe in der benötigten Größe erzeugt. Die Steuerung für die Steuerventile im Bremskreis der Hinterachse wird - mit Ausnahme des ABS-Betriebs - einfacher.

### Zeichnung

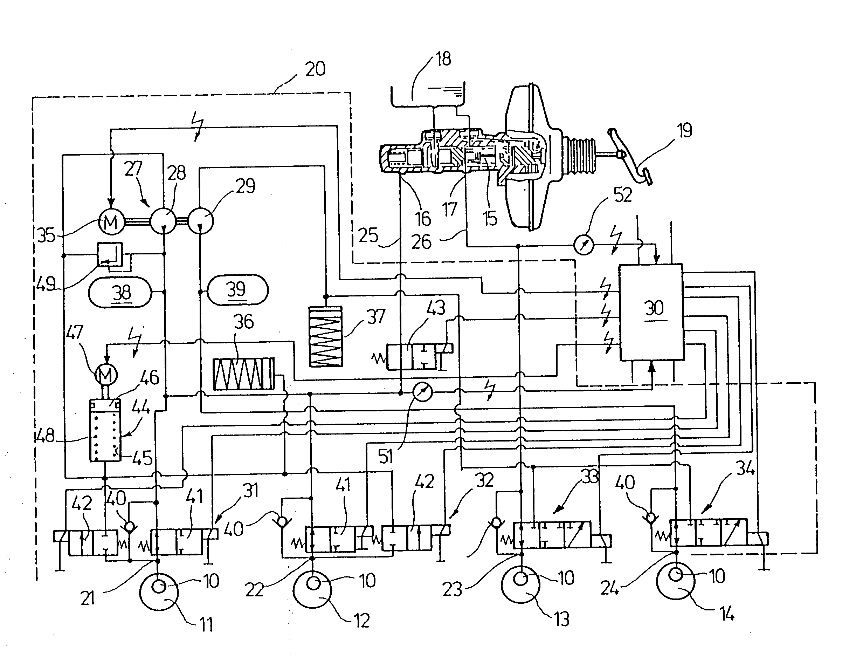

Die Erfindung ist anhand eines in der Zeichnung dargestellten Ausführungsbeispiels in der nachfolgenden Beschreibung näher erläutert. Dabei zeigt die Zeichnung ein Blockschaltbild einer Zweikreisbremsanlage mit Vorderachs/ Hinterachs-Bremskreisaufteilung, Blockierschutzsystem und Antriebsschlupfregelung für einen Personenkraftwagen.

### Beschreibung des Ausführungsbeispiels

Bei der in der Zeichnung im Blockschaltbild dargestellten hydraulischen Zweikreisbremsanlage mit Vorderachs/ Hinterachs- oder vorne/hinten-Bremskreisaufteilung, Blockierschutzsystem (ABS) und Antriebsschlupfregelung (ASR), letztere auch Vortriebsregelung genannt, für einen Personenkraftwagen, sind die Radbremszylinder 10 der Hinterräder 11,12 in dem einen Bremskreis und die Radbremszylinder 10 der Vorderräder 13,14 in dem anderen Bremskreis angeordnet. Die Hinterräder stellen dabei die Antriebsräder des Personenkraftwagens dar. Zu der Zweikreisbremsanlage gehört in an sich bekannter Weise ein Hauptbremszylinder 15, der zwei getrennte Bremskreisausgänge 16,17 zum Anschließen des Hinterachs- bzw. Vorderachs-Bremskreises aufweist und mit einem Bremsflüssigkeitsbehälter 18 in Verbindung steht. Bei Betätigung eines Bremspedals 19 wird vom Hauptbremszylinder 15 ein gleich großer Bremsdruck an den beiden Bremskreisausgängen 16,17 ausgesteuert.

Zu der Zweikreisbremsanlage gehört ferner ein Vierkanal-Hydroaggregat 20, das vier Auslaßkanäle 21 - 24 aufweist. An jedem Auslaßkanal 21 - 24 ist ein Radbremszylinder 10 der Räder 11 - 14 angeschlossen. Jedem Auslaßkanal 21 - 24 ist ein Steuerventil 31 - 34 zugeordnet, die von einer elektronischen Steuervorrichtung 30 gesteuert werden und im ABS-Betrieb einen radschlupfabhängigen Bremsdruck in den zugeordneten Radbremszylindern 10 aufbauen. Eine Rückförderpumpe 27, die Bestandteil des Vierkanal-Hydroaggregats 20 ist, weist zwei Pumpenelemente 28,29 auf, die von einem Elektromotor 35 gemeinsam angetrieben werden. Die Pumpenelemente 28,29 dienen zum Rückfördern von Bremsflüssigkeit beim Druckabbau in den Bremsen während des ABS-Betriebs und zur Erzeugung eines Bremsversorgungsdrucks für die Hinterräder im ASR-Betrieb. Jeweils ein Pumpenelement 28,29 ist in einem Bremskreis wirksam und eingangsseitig jeweils über die beiden den gleichen Bremskreis zugeordneten Steuerventile 31,32 bzw. 33,34 mit den Radbremszylindern 10 der Fahzeugräder 11 - 14 verbindbar und ausgangsseitig über je eine Verbindungsleitung 25 bzw. 26 an dem zugeordneten Bremskreisausgang 16 bzw. 17 des Hauptbremszylinders 15 angeschlossen. In den Pumpenelementen 28,29 sind in bekannter Weise jeweils ein Pumpeneinlaß- und -auslaßventil integriert, die der Übersichtlichkeit halber nicht dargestellt sind. An dem Eingang der Pumpenelemente 28,29 ist jeweils ein Niederdruckspeicher 36 bzw. 37 angeschlossen, während mit der Ausgangsseite der Pumpenelemente 28,29 jeweils eine Dämpfungskammer 38,39 verbunden ist.

Die Steuerventile 33,34 im Bremskreis der Vorderachse sind als 3/3-Wegemagnetventile mit Federrückstellung ausgebildet. Sie sind mit ihrem ersten Ventilanschluß an je einem Auslaßkanal 23 bzw. 24, mit ihrem zweiten Ventilanschluß an der Verbindungsleitung 26 und mit ihrem dritten Ventilanschluß an dem Eingang des zugeordneten Pumpenelements 29 angeschlossen. Die Steuerventile 33,34 sind in bekannter Weise so ausgebildet, daß in ihrer ersten, nicht erregten Grundstellung ein ungehinderter Durchgang von der Verbindungsleitung 26 zu den Auslaßkanälen 23,24 besteht, wodurch der vom Hauptbremszylinder 15 am Bremskreisausgang 17 ausgesteuerte Bremsdruck in die Radbremszylinder 10 der Vorderräder 13,14 gelangt. In der zweiten Ventilmittelstellung, die durch Erregung der Steuerventile 33,34 mit halbem Maximalstrom herbeigeführt wird, ist dieser Durchgang unterbrochen, und alle Ventilanschlüsse sind abgesperrt, so daß der in den Radbremszylindern 10 aufgebaute Bremsdruck konstant gehalten wird. In der dritten Ventilendstellung, die durch Ventilerregung mit Maximalstrom eingestellt wird, werden die Ausgangskanäle 23 und 24 und damit die Radbremszylinder 10 der Vorderräder 13,14 mit dem Eingang des Pumpenelements 29 verbunden, so daß Bremsflüssigkeit aus den Radbremszylindern 10 in die Niederdruckspeicher 37 abfließen kann, um dann von dem Pumpenelement 29 über die Verbindungsleitung 26 zu dem Hauptbremszylinder 15 zurückgefördert zu werden.

Die Steuerventile 31,32 im Hinterachs-Bremskreis bestehen jeweils aus einem Einlaßventil 41 und einem Auslaßventil 42, die jeweils als 2/2-Wegemagnetventile mit Federrückstellung ausgebildet sind. Jeweils ein Anschluß von Einlaßventil 41 und Auslaßventil 42 ist mit dem zugeordneten Auslaßkanal 21 bzw. 22 verbunden, während der andere Anschluß jedes Einlaßventils 41 an der Verbindungsleitung 25 zum Hauptbremszylinder 15 und der andere Anschluß jedes Auslaßventils 42 an dem Eingang des Pumpenelements 28 liegt. Die Einlaßventile 41 sind in ihrer unerregten Grundstellung geöffnet, während die Auslaßventile 42 in ihrer unerregten Grundstellung geschlossen sind. Allen Steuerventilen 31 - 34 ist ein Rückschlagventil 40 mit zu den Auslaßkanälen 21 - 24 weisender Sperrichtung parallel geschaltet.

Für den ASR-Betrieb ist einerseits in der Verbindungsleitung 25 ein als 2/2-Wegemagnetventil mit Federrückstellung ausgebildetes Umschaltventil 43 angeordnet und andererseits ein Bremsflüssigkeitsspeicher 44 vorgesehen, der an dem Eingang des Pumpenelements 28 angeschlossen ist. Der Bremsflüssigkeitsspeicher 44 ist als aktiver Speicher ausgebildet, dessen in einem Speicherzylinder 45 verschieblicher Speicherkolben 46 von einem elektromotorischen Antrieb 47 gegen die Kraft einer Speicherfeder 48 angetrieben wird. Der elektromotorische Antrieb 47 wird ebenso wie der Elektromotor 35 der Rückförderpumpe 27 von der Steuervorrichtung 30 gesteuert. Der dabei von dem aktivierten Bremsflüssigkeitsspeicher 44 an das Pumpenelement 28 abgegebene Ladedruck, mit welchem Bremsflüssigkeit in das Pumpenelement 28 eingespeist wird, ist dabei steuerbar. Dem Pumpenelement 28 ist ein Druckbegrenzungsventil 49 mit zum Pumpeneingang weisender Öffnungsrichtung parallel geschaltet. An den Bremskreis der Hinterachse ist ein Hinterachs-Bremsdrucksensor 51 und an dem Bremskreis für die Vorderachse ein Vorderachs-Bremsdrucksensor 52 angeschlossen, die druckseitig jeweils an der Verbindungsleitung 25 bzw. 26 vom Hauptbremszylinder 15 zu den jeweiligen Bremskreisen liegen und deren elektrisches Ausgangssignal der Steuervorrichtung 30 zugeführt sind.

Die Wirkungsweise der beschriebenen Zweikreisbremsanlage ist wie folgt:

Mit Betätigung des Bremspedals 19 wird an den Bremskreisausgängen 16,17 des Hauptbremszylinders 15 ein vom Pedalweg abhängiger Bremsdruck erzeugt, der über die Verbindungsleitung 25,26 in die beiden Bremskreise eingesteuert wird. Sobald der Vorderachs-Bremsdrucksensor 52 ein elektrisches Bremsdrucksignal an die Steuervorrichtung 30 legt, schaltet diese das Umschaltventil 43 um, so daß die Verbindungsleitung 25 abgesperrt und der Hinterachs-Bremskreis vom Bremskreisausgang 16 des Hauptbremszylinders 15 abgetrennt wird. Zugleich wird die Rückförderpumpe 27 eingeschaltet und der Bremsflüssigkeitsspeicher 44 durch Einschalten des elektrischen Antriebs 47 aktiviert. Der Bremsflüssigkeitsspeicher 44 speist Bremsflüssigkeit mit Ladedruck in das Pumpenelement 28 ein, das seinerseits über die geöffneten Eingangsventile 41 der beiden Steuerventile 31,32 einen Bremsdruck in den Radbremszylindern 10 der Hinterräder 11,12 aufbaut. Der im Hinterachs-Bremskreis erzeugte Bremsdruck wird von dem Hinterachs-Bremsdrucksensor 51 erfaßt und als Bremsdrucksignal an die Steuervorrichtung 30 gegeben. Sobald dieses Bremsdrucksignal einem Sollwert entspricht, wird der Bremsflüssigkeitsspeicher 44 deaktiviert und so der Bremsdruck gehalten.Der Sollwert ist als Funktion des Bremsdrucks im Vorderachs-Bremskreis vorgegeben und in der Steuervorrichtung 30 abgespeichert. Er kann beispielsweise dem mathematischen Ausdruck entsprechen, wie er in der EP 0 062 246 Bl angegeben ist und das Gesamtgewicht des Fahrzeugs, die Höhe des Fahrzeugschwerpunktes über Grund und die horizontalen Abstände des Schwerpunktes des Fahrzeuggewichtes von der Vorderachse bzw. Hinterachse berücksichtigt.

Tritt während der Bremspedalbetätigung an einem der Räder 11 - 14 ein Schlupf auf, so wird dieser von den hier nicht dargestellten, jeweils einem Rad zugeordneten Schlupfsensoren erfaßt und der Steuervorrichtung 30 gemeldet. Diese steuert das dem jeweils schlüpfenden Rad zugeordnete Steuerventil 33,34 bzw. das Auslaßventil 42 des Steuerventils 31,32 an und bewirktdurch ensprechendes Umschalten einen Bremsdruckabbau in dem Radbremszylinder 10 des schlüpfenden Rades 11 - 14 bis der Schlupf beseitigt ist (ABS-Betrieb).

Tritt bei unbetätigtem Bremspedal 19 an einem der angetriebenen Hinterräder 11,12 Schlupf auf, so wird dies von den zugeordneten Schlupfsensoren wiederum der Steuervorrichtung 30 gemeldet. Diese schaltet das Umschaltventil 43 in seine Schließstellung, so daß wiederum der Hinterachs-Bremskreis vom Hauptbremszylinder 15 abgetrennt ist. Zugleich wird die Rückförderpumpe 27 eingeschaltet und der Bremsflüssigkeitsspeicher 44 aktiviert. Das von dem Bremsflüssigkeitsspeicher 44 gespeiste Pumpenelement 28 erzeugt einen Bremsdruck, der über das Einlaßventil 41 des jeweils schlüpfenden Antriebsrades 11,12 in dessen Radbremszylinder 10 eingesteuert wird (ASR-Betrieb). Schlüpft nur ein Hinterrad 11,12, so wird das Einlaßventil 41 des dem nicht schlüpfenden Hinterrad 11 bzw. 12 zugeordneten Steuerventils 31 bzw. 32 in seine Schließstellung umgeschaltet, so daß sich in dem Radbremszylinder 10 des nicht schlüpfenden Hinterrades 11 bzw. 12 kein Bremsdruck aufbauen kann. Der in dem Radbremszylinder 10 erforderliche Bremsdruck wird durch entsprechende Steuerung des Ladedrucks des Bremsflüssigkeitsspeichers 44 von dem Pumpenelement 28 eingestellt. Ist der erforderliche Bremsdruck erreicht, so wird das Einlaßventil 41 in seine Schließstellung umgeschaltet und der im Radbremszylinder 10 eingesteuerte Bremsdruck gehalten. Das Pumpenelement 28 fördert über das Druckbegrenzungsventil 49. Zum Druckabbau wird das Auslaßventil 42 in seine Offenstellung umgeschaltet. Die von dem Radbremszylinder 10 abfließende Bremsflüssigkeit wird von dem Bremsflüssigkeitsspeicher 44 aufgenommen.

Die Erfindung ist nicht auf das beschriebene Ausführungsbeispiel beschränkt. So kann der Speicherkolben 46 des als aktiver Speicher ausgebildeten Bremsflüssigkeitsspeichers 44 auch durch einen Elektromagneten, durch Druckluft oder durch ein Vakuum zur axialen Verschiebebewegung angetrieben werden. Die Steuerventile 33 und 34 in dem Vorderachs-Bremskreis können in gleicher Weise wie die Steuerventile 31 und 32 im Hinterachs-Bremskreis aus jeweils einem Einlaßventil und einem Auslaßventil 34 gebildet werden. Dadurch ist nur ein einziger Ventiltyp für die gesamte Zweikreisbremsanlage erforderlich. Die Aufteilung der Steuerventile 31 und 32 in Ein- und Auslaßventile 41,42 hat den Vorteil, daß Bremsflüssigkeitsverluste im Bremsflüssigkeitsspeicher 44 vom Hauptbremszylinder 15 wieder ausgeglichen werden können. Hierzu ist bei in Grundstellung befindlichem Einlaßventil 41 das Auslaßventil 42 umzuschalten, so daß über die geöffneten Ventile und das nicht angesteuerte Umschaltventil 43 eine Verbindung des Bremsflüssigkeitsspeichers 44 zum Hauptbremszylinder 15 hergestellt ist.

## Patentansprüche

1. Hydraulische Zweikreisbremsanlage mit Vorderachs/ Hinterachs-Bremskreisaufteilung, bei welcher die Räder (11,12) der Hinterachse und die Räder (13,14) der Vorderachse jeweils in einem Bremskreis angeordnet sind, Blockierschutzsystem (ABS) und Antriebsschlupfregelung (ASR) für Kraftfahrzeuge, mit einem zwei Bremskreisausgänge (16,17) aufweisenden Hauptbremszylinder (15) zum Aussteuern eines Bremsdrucks durch Bremspedalbetätigung, mit einem an den beiden Bremskreisausgängen angeschlossenen Vierkanal-Hydroaggregat (20), das vier auf zwei Bremskreise aufgeteilte Auslaßkanäle (21,22,23,24) zum Anschließen der Radbremszylinder (10) der Fahrzeugräder (11,12,13,14), jeweils einem Auslaßkanal (21,22,23,24) zugeordnete Steuerventile (31,32,33,34) zum Aussteuern eines radschlupfabhängigen Bremsdrucks in den Radbremszylindern (10), die einerseits mit je einem Auslaßkanal (21,22,23,24) und andererseits paarweise über je eine Verbindungsleitung (25,26) mit einem Bremskreisausgang (16,17) des Hauptbremszylinders (15) verbunden sind, und eine Rückförderpumpe (27) mit zwei getrennten, in jeweils einem Bremskreis wirksamen Pumpenelementen (28,29) zum Rückfördern von Bremsflüssigkeit bei Bremsdruckabbau in den Radbremszylindern (10) aufweist, die jeweils eingangsseitig über die Steuerventile (31,32,33,34) mit den einem Bremskreis zugehörigen Auslaßkanälen (21,22,23,24) verbindbar und ausgangsseitig über jeweils eine der Verbindungsleitungen mit dem diesem Bremskreis zugeordneten Bremskreisausgang (16,17) des Hauptbremszylinders (15) verbunden sind, und mit einer Einrichtung zur Bremsdruckversorgung des Hinterachs-Bremskreises bei Antriebsschlupfregelung, die ein in der Verbindungsleitung zum Bremskreis der Hinterachse angeordnetes Umschaltventil (43), das bei Antriebsschlupfregelung die Verbindungsleitung (25) auftrennt und den Hinterachs-Bremskreis vom Hauptbremszylinder (15) abtrennt, und eine Pumpenspeisevorrichtung (44) aufweist, die bei ihrer Aktivierung in das dem Hinterachs-Bremskreis zugeordnete Pumpenelement (28) der Rückförderpumpe (27) Bremsflüssigkeit einspeist, dadurch gekennzeichnet, daß an dem Hinterachs-Bremskreis und an dem Vorderachs-Bremskreis jeweils ein Bremsdrucksensor (51,52) angeschlossen ist, der den momentanen Bremsdruck als elektrisches Bremsdrucksignal ausgibt, und daß eine elektrische Steuervorrichtung (30) vorgesehen ist, die eingangsseitig an die Bremsdrucksensore (51,52) angeschlossen und ausgangsseitig mit dem Umschaltventil (43), der Rückförderpumpe (27) und der Pumpenspeisevorrichtung (44) verbunden und so ausgebildet ist, daß sie auf ein Bremsdrucksignal des Vorderachs-Bremsdrucksensors (52) hin das Umschaltventil (43) in seine Schließstellung umsteuert, die Rückförderpumpe (27) einschaltet und die Pumpenspeisevorrichtung (44) mindestens solange aktiviert, bis das vom Hinterachs-Bremsdrucksensor (51) ausgegebene Bremsdrucksignal einem Sollwert entspricht, der in Abhängigkeit vom Bremsdruck im Vorderdruck-Bremskreis vorgegeben ist.

2. Bremsanlage nach Anspruch 1, dadurch gekennzeichnet, daß die Pumpenspeisevorrichtung einen aktiven Speicher (44) mit steuerbarem Speicherdruck aufweist, der an dem Eingang des im Hinterachs-Bremskreis angeordneten Pumpenelements (28) angeschlossen ist und dessen Speicherdruck die Größe des von dem Pumpenelement (28) über die geöffneten Steuerventile (31,32) in den Radbremszylindern (10) der Hinterräder (11,12) eingestellten Bremsdruck vorgibt.

3. Bremsanlage nach Anspruch 2, dadurch gekennzeichnet, daß die den Auslaßkanälen für die Radbremszylinder der Hinterräder (11,12) zugeordneten Steuerventile (31,32) aus je einem Ein- und einem Auslaßventil (41,42) bestehen, die als 2/2-Wegemagnetventile mit Federrückstellung ausgebildet sind, und daß bei Antriebsschlupfregelung zum Druckaufbau in den Radbremszylindern (10) die Einlaßventile (41) geöffnet und die Auslaßventile (42) geschlossen, zum Druckhalten die Einlaßventile (41) und die Auslaßventile (42) geschlossen und zum Druckabbau die Einlaßventile (41) geschlossen und die Auslaßventile 42) geöffnet sind und daß bei Wirksamwerden des Blockierschutzsystems die Einlaßventile (41) ständig und die Auslaßventile (42) nur zum Druckabbau geöffnet sind.

4. Bremsanlage nach Anspruch 3, **dadurch gekennzeichnet,** daß bei betätigtem Bremspedal (19) zum Druckhalten der Speicher (44) deaktiviert wird.

## Claims

1. Hydraulic twin-circuit brake system for motor vehicles, having an anti-lock brake system, drive slip control and front axle/rear axle brake circuit division, in which the wheels (11, 12) of the rear axle and the wheels (13, 14) of the front axle are respectively arranged in one brake circuit, having a main brake cylinder (15), with two brake circuit outlets (16, 17), for selecting a brake pressure by brake pedal actuation, having a four-channel hydraulic unit (20) connected to the two brake circuit outlets, which hydraulic unit (20) has four outlet channels (21, 22, 23, 24), divided between two brake circuits, for connecting the wheel brake cylinders (10) of the vehicle wheels (11, 12, 13, 14) to control valves (31, 32, 33, 34) respectively associated with an outlet channel (21, 22, 23, 24) in order to select a brake pressure, dependent on wheel slip, in the wheel brake cylinders (10), which are connected, on the one hand, to one outlet channel (21, 22, 23, 24) each and, on the other hand, in pairs via one connecting conduit (25, 26) for each pair to a brake circuit outlet (16, 17) of the main brake cylinder (15), and a return pump (27) with two separate pump elements (28, 29), each effective in one brake circuit, for returning brake fluid in the case of a reduction of brake pressure in the wheel brake cylinders (10), which wheel brake cylinders (10) can be respectively connected at the inlet end via the control valves (31, 32, 33, 34) to the outlet channels (21, 22, 23, 24) associated with one brake circuit and can be respectively connected at the outlet end via one of the connecting conduits to the brake circuit outlet (16, 17), associated with this brake circuit, of the main brake cylinder (15), and having a device for brake pressure supply to the rear axle brake circuit in the case of drive slip control, which device has a change-over valve (43) arranged in the connecting conduit to the brake circuit of the rear axle, which change-over valve (43) cuts off the connecting conduit (25) and separates the rear axle brake circuit from the main brake cylinder (15) in the case of drive slip control, and has a pump feed appliance (44) which, on its activation, feeds brake fluid into the pump element (28), of the return pump (27), associated with the rear axle brake circuit, characterised in that connected to each of the rear axle and front axle brake circuits, there is a brake pressure sensor (51, 52) which emits the instantaneous brake pressure as an electrical brake pressure signal, and in that an electrical control appliance (30) is provided which is connected at its input end to the brake pressure sensors (51, 52) and is connected at its output end to the change-over valve (43), the return pump (27) and the pump feed appliance (44) and is configured in such a way that, on a brake pressure signal of the front axle brake pressure sensor (52), it switches over the change-over valve (43) into its closed position, switches on the return pump (27) and activates the pump feed appliance (44) at least until the brake pressure signal emitted from the rear axle brake pressure sensor (51) corresponds to a required value which is specified as a function of the brake pressure in the front pressure [sic] brake circuit.

2. Brake system according to Claim 1, characterised in that the pump feed appliance has an active reservoir (44) with controllable reservoir pressure, which is connected to the inlet of the pump element (28) arranged in the rear axle brake circuit and whose reservoir pressure specifies the magnitude of the brake pressure set by the pump element (28), via the open control valves (31, 32), in the wheel brake cylinders (10) of the rear wheels (11, 12).

3. Brake system according to Claim 2, characterised in that the control valves (31, 32) associated with the outlet channels for the wheel brake cylinders of the rear wheels (11, 12) each consist of an inlet valve and an outlet valve (41, 42), which are configured as 2/2-way magnetic valves with spring reset, and in that, in the case of drive slip control, the inlet valves (41) are opened for pressure build-up in the wheel brake cylinders (10) and the outlet valves (42) are closed, the inlet valves (41) and the outlet valves (42) are closed for pressure retention and the inlet valves (41) are closed and the outlet valves (42) are open for pressure reduction and in that, when the anti-lock brake system becomes effective, the inlet valves (41) are continuously open and the outlet valves (42) are only open for pressure reduction.

4. Brake system according to Claim 3, characterised in that when the brake pedal (19) is actuated, the reservoir (44) is deactivated for pressure retention.

## Revendications

1. Installation de freinage hydraulique à deux circuits avec un circuit de freinage réparti sur essieu avant/essieu arrière, les roues (11, 12) de l'essieu arrière et les roues (13, 14) de l'essieu avant étant intégrées chaque fois à un circuit de freinage, un système anti-blocage de roue (ABS) et une régulation de patinage à l'entraînement (ASR) pour des véhicules automobiles, avec un maître-cylindre (15) à deux sorties de circuit de frein (16, 17) pour commander une pression de freinage par l'actionnement d'une pédale de frein, avec un ensemble hydraulique à quatre canaux (20) relié aux deux sorties de circuit de freinage, quatre canaux de sortie (21, 22, 23, 24) répartis sur deux circuits de freinage étant reliés au cylindre de frein de roue (10) des roues (11, 12, 13, 14) du véhicule, chaque fois un tiroir de commande (31, 32, 33) associé à un canal de sortie (21, 22, 23, 24) pour commander une pression de frein dépendant du patinage de roue dans les cylindres de frein de roue (10), qui sont reliés, d'une part, chaque fois avec un canal de sortie (21, 22, 23, 24) et, d'autre part, par paire, à l'aide d'une conduite de liaison (25, 26) avec une sortie de circuit de frein (16, 17) du maître-cylindre (15) et une pompe de retour (27) à deux éléments de pompe (28, 29,) distincts, dans chacun des deux circuits de frein pour réalimenter en liquide de frein, lors de la diminution de la pression de frein dans les cylindres de frein de roue (10), ces éléments étant chaque fois reliés en entrée par les tiroirs de commande (31, 32, 33, 34) aux canaux de sortie (21, 22, 23, 24) appartenant à un circuit de freinage, et en sortie, par chaque fois l'une des conduites de liaison à la sortie (16, 17) du maître-cylindre (15), sortie associée à ce circuit de freinage, et une installation pour l'alimentation en pression de freinage du circuit de freinage de l'essieu arrière pour la régulation du patinage à l'entraînement, qui coupe un tiroir inverseur (43) monté dans la conduite de liaison du circuit de freinage de l'essieu arrière, et qui, pour la régulation du patinage à l'entraînement, ouvre la conduite de liaison (25) et coupe le circuit de freinage de l'essieu arrière par rapport au maître-cylindre (15) ainsi qu'à un dispositif d'alimentation de pompe (44) qui lorsqu'il est activé, fournit du liquide de frein à l'élément (28) de la pompe (27) de refoulement associé au circuit de freinage de l'essieu arrière, installation caractérisée en ce qu'un capteur de pression de frein (51, 52) respectif est prévu dans le circuit de freinage de l'essieu arrière et dans le circuit de freinage de l'essieu avant, ce capteur fournissant la pression de frein instantanée comme signal électrique de pression de frein et en ce qu'il est prévu un dispositif de commande électrique (30) dont l'entrée est reliée aux capteurs de pression de frein (51, 52) et dont la sortie est reliée au tiroir inverseur (43), à la pompe de retour (27) et au dispositif d'alimentation de pompe (44) en étant conçue pour commuter dans sa position de fermeture le tiroir inverseur (43) en fonction d'un signal de pression de frein du capteur de pression de frein (52) de l'essieu avant, pour faire passer ce tiroir en position de fermeture, pour mettre en oeuvre la pompe de refoulement (27) et d'activer le dispositif de pompe d'alimentation (44) au moins jusqu'à ce que le signal de pression de frein émis par le capteur de pression de frein (51) de l'essieu arrière corresponde à une valeur de consigne qui est prédéterminée en fonction de la pression de frein régnant dans le circuit des roues avant.

2. Installation de freinage selon la revendication 1, caractérisée en ce que le dispositif d'alimentation de pompe comprend un accumulateur actif (44) dont la pression d'alimentation est commandée, et qui est relié à l'entrée de l'élément de pompe (28) associé au circuit de frein arrière et dont la pression d'accumulation prédétermine l'amplitude de la pression de frein réglée par l'élément de pompe (28) à travers les soupapes de commande (31, 32) ouvertes aux cylindres de frein de roue (10) des roues arrière (11, 12).

3. Installation de freinage selon la revendication 2, caractérisée en ce que les tiroirs de commande (31, 32) associés aux canaux de sortie des cylindres de frein de roue des roues arrière (11, 12) se composent chaque fois d'un distributeur d'entrée et d'un distributeur de sortie (41, 42) en forme de distributeurs à électro-aimant à 2/2 voies avec rappel par ressort et en ce que pour la régulation du glissement à l'entraînement, on ouvre les soupapes d'entrée (41) pour établir une montée en pression dans les cylindres de frein de roue (10), et on ferme les distributeurs de sortie (42), et pour maintenir la pression, on ferme les tiroirs d'alimentation (41) et les tiroirs de sortie (42) et pour faire tomber la pression on ferme les tiroirs d'alimentation (41) et on ouvre les tiroirs de sortie (42) et, lorsque le système de protection anti-blocage se met en oeuvre, on ouvre en permanence les soupapes d'admission (41) et on ouvre les soupapes d'échappement (42) pour diminuer la pression.

4. Installation de freinage selon la revendication 3, caractérisée en ce qu'on désactive l'accumulateur (44) pour conserver la pression lorsque la pédale de frein (19) est actionnée.
